# FASCICULE DE BREVET EUROPEEN

(11) **EP 0 435 720 B1**
(45) Date de publication et mention de la délivrance du brevet: **27.10.1993**
(21) Numéro de dépôt: 90403507.8
(22) Date de dépôt: 10.12.1990
(51) Int. Cl.: F16L 29/00

(54) **Dispositif de raccord rapide et appareillage pour sa mise en oeuvre**
Schnellverbindungs-Einrichtung und Gerät, in welchem sie verwendet wird
Quick acting coupling device and installation in which it is used

(30) Priorité: 27.12.1989 FR 8917235
(43) Date de publication de la demande: 03.07.1991
(73) Titulaire: HUTCHINSON S.A. une Société Anonyme dotée d'un Conseil de Surveillance et d'un Directoire, F-75008 Paris (FR)
(72) Inventeur: Briet, Gilles, F-71130 Gueugnon (FR)
(74) Mandataire: Orès, Bernard

(56) Documents cités:
- DE-A- 2 452 858
- DE-A- 2 453 237
- DE-U- 1 998 339
- GB-A- 1 083 451
- GB-A- 1 116 951
- US-A- 2 924 472
- US-A- 3 844 585

## Description

L'invention a pour objet un dispositif de raccord rapide, notamment pour la liaison d'un premier embout sur lequel est fixée une tubulure ou canalisation de circulation d'un liquide de refroidissement d'un moteur de véhicule automobile à un embout d'un circuit d'essai, aérotherme ou autre organe du véhicule et dans lequel ledit premier embout porte un perforateur d'un obturateur propre à être mis en place dans ledit embout préalablement au remplissage du moteur par ledit liquide de refroidissement.

Un tel dispositif est décrit dans EP-A1-0 347 279 qui décrit également un obturateur propre à entrer dans la constitution d'un tel dispositif, cet obturateur comprenant un joint à membrane en matière élastomère, comme du caoutchouc ou analogue, en forme générale de cuvette, à fond présentant des zones de plus faible résistance pour sa déchirure après perforation en son centre, lesdites zones étant conformées suivant une étoile à branches rayonnantes dont les extrémités sont sur un cercle qui limite avec la périphérie une zone annulaire.

Si le dispositif décrit dans EP-A1-0 347 279 donne satisfaction, il est apparu que ses performances de fonctionnement pouvaient être accrues et c'est, par sonséquent, un but général de l'invention de fournir des perfectionnements à un tel dispositif de raccord.

C'est, à cet égard, un but de l'invention de fournir des perfectionnements au dispositif d'obturateur qui permettent de considérablement réduire les efforts de montage.

C'est, aussi, un but de l'invention de fournir des perfectionnements au dispositif d'obturateur qui permettent en outre de réduire les efforts de décollage du joint après une longue utilisation avec pour conséquence la possibilité d'un démontage facile et cela même après un service prolongé sans démontage.

C'est, encore, un but de l'invention de fournir des perfectionnements au dispositif d'obturateur qui en accroissent la fiabilité, notamment sur le plan de l'étanchéité.

C'est, enfin, un but de l'invention de fournir des perfectionnements au dispositif d'obturateur qui permettent une fabrication plus simple, notamment eu égard aux tolérances de fabrication des embouts.

Un dispositif de raccord rapide d'un premier embout à un second embout, notamment pour la liaison d'un premier embout sur lequel est fixée une tubulure ou canalisation de circulation d'un liquide de refroidissement d'un moteur de véhicule automobile à un second embout de circuit d'essai, aérotherme ou autre organe du véhicule, dans lequel ledit premier embout porte un perforateur d'un obturateur propre à être mis en place dans ledit second embout préalablement au remplissage du moteur par ledit liquide de refroidissement et qui comprend un joint à membrane en matière élastomère, comme du caoutchouc ou analogue, en forme générale de cuvette à fond présentant des zones de plus faible résistance pour sa déchirure après perforation en son centre, lesdites zones étant conformées suivant une étoile à branches rayonnantes dont les extrémités sont sur un cercle qui limite avec la périphérie une zone annulaire est caractérisé en ce que l'extrémité libre de la paroi latérale de la membrane surmoulée sur une armature à demi-section droite en L porte au moins une lèvre d'étanchéité, orientée de ladite extrémité vers le fond, la surface externe de la lèvre divergeant par rapport à la paroi latérale.

Dans une forme de réalisation, la paroi latérale porte deux lèvres avantageusement, mais non nécessairement, symétriques par rapport à la paroi latérale.

Selon une autre caractéristique de l'invention, la paroi latérale de la membrane présente au moins sur sa face externe et, de préférence sur sa face interne également, des bourrelets annulaires.

Selon encore une autre caractéristique de l'invention, les bourrelets de la face externe sont décalés longitudinalement par rapport aux bourrelets de la face interne.

Selon une variante de réalisation, les bourrelets des faces externe et interne ne sont pas décalés longitudinalement.

Dans un mode préféré de mise en oeuvre de l'invention l'extrémité de la paroi porte deux lèvres avantageusement, mais non nécessairement, symétriques par rapport à la paroi latérale, dont l'une, extérieure, est de diamètre maximal supérieur au diamètre intérieur de la partie du premier embout contre laquelle est destinée à venir appuyer à étanchéité avant montage du second embout dans le premier et dont l'autre, intérieure, est de diamètre maximal inférieur au diamètre de la partie dudit second embout contre laquelle elle est destinée à venir appuyer à étanchéité avant son montage sur ledit second embout.

D'autres caractéristiques et avantages de l'invention apparaîtront de la description qui suit, faite à titre d'exemple et en référence au dessin annexé, dans lequel:
- la figure 1 est une vue schématique en coupe longitudinale illustrant un dispositif selon l'invention dans sa condition précédant la mise en liaison des embouts à relier entre eux ;
- la figure 2 est une vue analogue à celle de la figure 1, mais dans la condition de liaison ;
- la figure 3 est une vue partielle, en coupe longitudinale et à plus grande échelle, d'un obturateur de dispositif selon l'invention ;
- la figure 4 est une vue suivant la flèche F de la figure 3 ;
- la figure 5 est une section à grande échelle selon la ligne 5-5 de la figure 4 ;
- la figure 6 est une vue partielle à grande échelle du dispositif après liaison des embouts entre eux;
- la figure 7 est une vue analogue à la figure 2 mais pour une variante d'un des embouts.

Un dispositif de raccord rapide selon l'invention est illustré dans ce qui suit, et sans que cette indication ait quelque caractère limitatif que ce soit, comme destiné à équiper la tubulure ou durite 111 d'un moteur, non représenté, qui, préalablement à son montage, est essayé sur un banc comportant un circuit de liquide de refroidissement se terminant à une extrémité par une tubulure 112 qui est l'une des parties constitutives du dispositif de raccord selon l'invention. Celui-ci comprend un fourreau interne cylindrique 114 d'axe A sur lequel est emmanché la tubulure 111 maintenue en position par une bague 115. Le fourreau 114, qui présente une collerette externe 116 de butée de la tubulure 111, présente également une seconde collerette 117 de plus grand diamètre que la première et qui forme le fond d'un espace V limité intérieurement par une cheminée 118 prolongeant le fourreau 114 et extérieurement par un embout 119 constitutif de la partie femelle du raccord laquelle porte des moyens 120, par exemple à pattes élastiques, pour sa liaison amovible à la partie mâle 121 du raccord comprenant la tubulure 112.

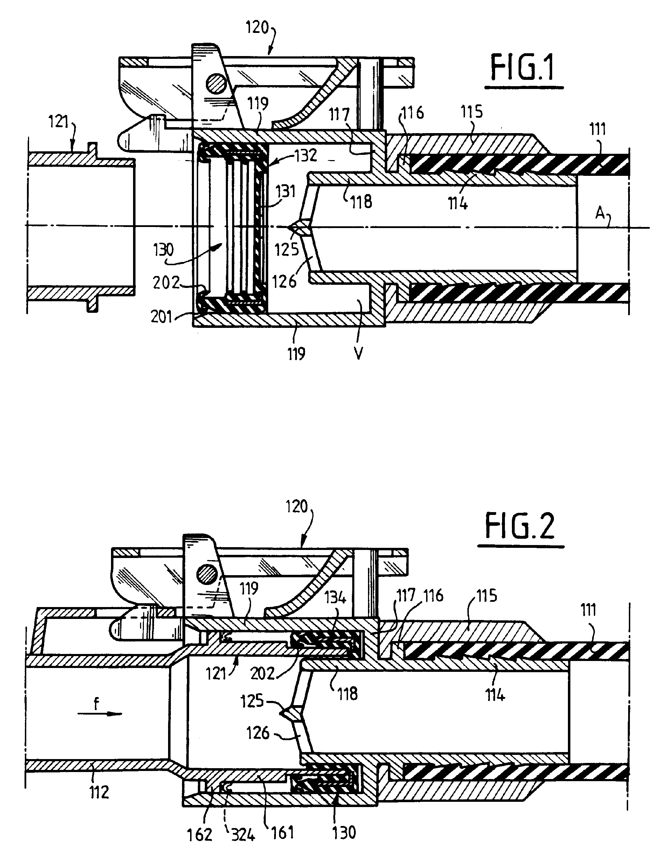

Comme dans le dispositif selon EP-A1-0 347 279, la cheminée 118 porte à son extrémité un perforateur axial 125 tenu par des bras rayonnants 126 et, de façon analogue à ce qui est décrit dans ladite demande, un obturateur 130 est associé à l'embout 119 dans la condition précédant l'établissement de la liaison destinée à former le circuit et qui est celle illustrée sur la figure 1.

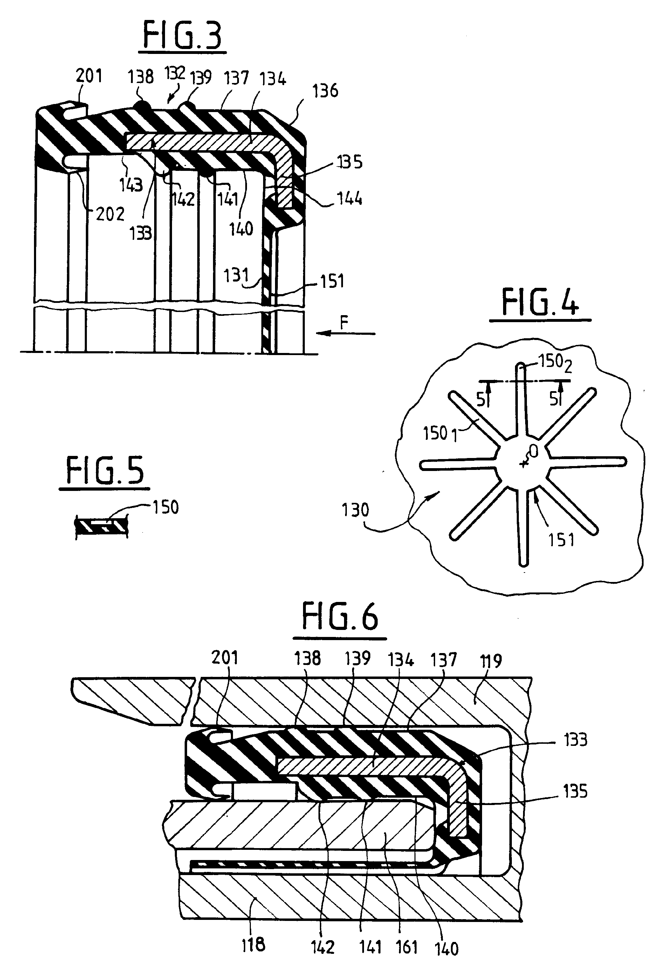

Comme bien montré sur les figures 3, 4 et 5, l'obturateur 130 est constitué par un joint à membrane en matériau élastomère, comme du caoutchouc ou un matériau analogue, conformé suivant une cuvette à fond 131 et paroi latérale 132 surmoulée sur une armature métallique 133 dont la demi-section droite est un L à branche axiale de grande dimension 134 et branche radiale de petite dimension, 135. Comme bien visible sur la figure 3, la face du joint en regard du perforateur 125 présente une surface conique 136 à la jonction du fond 131 proprement dit et de la paroi latérale dont l'extrémité libre est conformée suivant deux lèvres d'étanchéité sensiblement symétriques 201 et 202, orientées longitudinalement de l'extrémité de la paroi latérale vers le fond 131 et dont les surfaces externes sont divergentes par rapport à la direction de l'axe de la membrane.

La paroi latérale 132 présente en outre sur sa face externe 137 des bourrelets 138 et 139 et sur sa face interne 140 des bourrelets 141 et 142 décalés longitudinalement par rapport aux premiers.

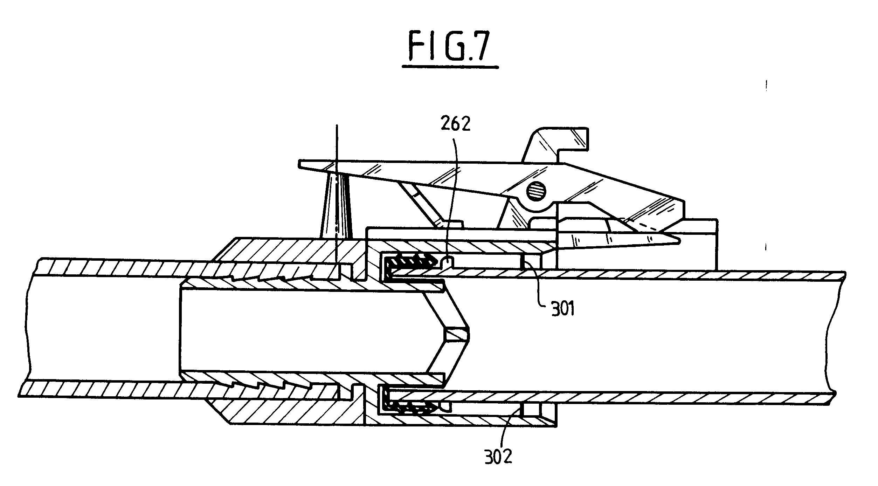

Sur ladite face interne 140 la surface latérale surmoulée sur l'armature 133 présente en outre des créneaux 143 et 144, les premiers sur le bord libre de la paroi latérale et les seconds à la jonction de ladite paroi et du fond 131, lesdits créneaux étant destinés à éviter la déformation de l'armature au moment du moulage. Le fond ou membrane 131 comporte, de fabrication, des zones de plus faible résistance que le reste de la membrane, par exemple en raison de leur moindre épaisseur (figure 5), lesdites zones destinées à assurer une déchirure régulière de la membrane étant disposées suivant un dessin en étoile régulier de centre O confondu avec celui du fond 131 et à branches rayonnantes 150₁, 151₂, 150₃... etc s'étendant à partir d'une zone centrale circulaire 151, elle aussi de plus faible épaisseur, jusqu'à la partie de plus forte épaisseur surmoulée sur la branche radiale de courte dimension 135 de l'armature métallique.

Dans la condition montrée sur la figure 1, qui est celle précédant le montage du moteur sur un véhicule qu'il est destiné à équiper, l'obturateur 130 est à distance du perforateur 125 et ferme à étanchéité l'embout 119 de sorte que le moteur rempli de liquide de refroidissement et mis en pression pour déceler des fuites éventuelles peut être aisément essayé.

Lorsque, ensuite, le moteur rempli de son liquide de refroidissement doit être assemblé sur la chaîne de montage du véhicule, la partie mâle 121 du raccord est déplacée dans le sens de la flèche f, figure 2, pour coopérer avec la partie femelle du raccord. Au cours de ce déplacement, la partie d'extrémité 161 de la tubulure 112 qui présente une collerette radiale 162 pénètre dans l'obturateur 130 en forme de cuvette jusqu'à butée de l'extrémité antérieure de sa partie 161 contre la partie 144 de fond de la cuvette de la membrane. Lorsque le mouvement de la partie mâle 121 se poursuit dans le sens de la flèche f, ladite partie entraîne l'obturateur 130 au rapprochement du perforateur 125 et quand ce dernier vient au contact de la zone 151 il commence à déchirer la membrane 131 et cette déchirure initiale progresse ensuite le long des lignes 150 tandis que la membrane se plaque sur la face externe de la cheminée 118.

A la fin du mouvement de rapprochement des parties mâle et femelle du raccord, les moyens 120 sont rendus opératoires et la condition est alors celle montrée sur la figure 2, ou à plus grande échelle sur la figure 6, où la membrane 131 de l'obturateur 130 est plaquée sur la surface externe du manchon 118.

Le dispositif selon l'invention, dans lequel l'étanchéité statique est obtenue à l'aide des lèvres 201, 202 et le blocage à l'aide des bourrelets 138, 139 et 141, 142, de petites dimensions, permet d'assurer le montage sans effort important.

Le raccord illustré sur la figure 7 ne diffère de celui montré sur la figure 2 que par la forme de l'embout mâle qui est muni d'ailettes de guidage élastiques 301, 302, la collerette 262 ayant alors un diamètre extérieur légèrement réduit de manière à éviter son frottement, contre l'embout femelle.

L'étanchéité procurée par les lèvres 201 et 202 rend généralement superflu le montage d'un joint supplémentaire tel que le joint torique 24 ou le joint torique 160 de EP-A-347 279.

Si, cependant, une redondance de la fonction d'étanchéité est souhaitée dans certains environnements, un tel joint ou un joint à lèvre supplémentaire peut être monté entre les parties élargies des deux embouts comme montré en pointillé en 324 sur la figure 2.

## Revendications

1. Dispositif de raccord rapide d'un premier embout à un second embout, notamment pour la liaison d'un premier embout sur lequel est fixée une tubulure ou canalisation de circulation d'un liquide de refroidissement d'un moteur de véhicule automobile à un second embout de circuit d'essai, aérotherme ou autre organe du véhicule, dans lequel ledit premier embout porte un perforateur (125) d'un obturateur (130) propre à être mis en place dans ledit second embout préalablement au remplissage du moteur par ledit liquide de refroidissement et qui comprend un joint à membrane en matière élastomère, comme du caoutchouc ou analogue, en forme générale de cuvette, à fond (131) présentant des zones de plus faible résistance (150) pour sa déchirure après perforation en son centre, lesdites zones étant conformées suivant une étoile à branches rayonnantes dont les extrémités sont sur un cercle qui limite avec la périphérie une zone annulaire, caractérisé en ce que l'extrémité libre de la paroi latérale (132) de la membrane surmoulée sur une armature à demi-section droite en L porte au moins une lèvre d'étanchéité (201, 202) orientée de ladite extrémité vers le fond (131), la surface externe de la lèvre divergeant par rapport à ladite paroi latérale (132).

2. Dispositif selon la revendication 1, caractérisé en ce que la paroi latérale (132) porte deux lèvres (201, 202) avantageusement, mais non nécessairement, symétriques par rapport à la paroi latérale.

3. Dispositif selon la revendication 1 ou la revendication 2, caractérisé en ce que la paroi latérale (132) présente sur sa face externe (137) au moins, et de préférence sur sa face interne (140) également, des bourrelets annulaires (138, 139 ; 141, 142).

4. Dispositif selon la revendication 3, caractérisé en ce que les bourrelets (138, 139) de la face externe (137) sont décalés longitudinalement par rapport aux bourrelets (141, 142) de la face interne (140).

5. Dispositif selon la revendication 3, caractérisé en ce que les bourrelets (138, 139) de la face externe (137) et ceux (141, 142) de la face interne (140) ne sont pas décalés longitudinalement.

## Patentansprüche

1. Schnellverbindungs-Einrichtung insbesondere für die Verbindung eines ersten Ansatzstückes, an dem ein Stutzen oder eine Leitung für den Kreislauf einer Kühlflüssigkeit für einen Kraftfahrzeugmotor befestigt ist, mit dem Ansatzstück eines Kreislaufes für Prüfzwecke, für eine Heizung oder für ein anderes Organ des Fahrzeugs, wobei das genannte erste Ansatzstück ein Perforierungsglied (125) für eine Verschlußdichtung (130) trägt, die dazu eingerichtet ist, im genannten Ansatzstück vor dem Auffüllen des Motors mit der genannten Kühlflüssigkeit eingesetzt zu werden, und die eine Verschlußdichtung aufweist, die eine insgesamt schüsselförmige Membrandichtung aus Elastomermaterial wie Gummi oder dergleichen aufweist, die am Boden (131) Bereiche (150) mit schwächerer Widerstandsfähigkeit für ihr Einreißen nach der Perforierung in ihrer Mitte aufweist, wobei die genannten Bereiche wie ein Stern mit strahlenartigen Armen ausgebildet sind, deren Enden auf einem Kreis liegen, der mit dem Umfang eine Ringzone begrenzt,
dadurch **gekennzeichnet**, daß das freie Ende der Seitenwand (132) der Membran, die auf eine Armierung mit L-förmigem Halbquerschnitt aufgeformt ist, mindestens eine Dichtlippe (201, 202) trägt, die vom genannten Ende aus dem Boden (131) zugewandt ist, wobei die Außenfläche der Lippe bezüglich der genannten Seitenwand (132) divergiert.

2. Einrichtung nach Anspruch 1, dadurch gekennzeichnet, daß die Seitenwand (132) vorteilhafterweise, aber nicht notwendigerweise zwei Lippen (201, 202) trägt, die bezüglich der Seitenwand symmetrisch sind.

3. Einrichtung nach Anspruch 1 oder Anspruch 2, dadurch gekennzeichnet, daß die Seitenwand (132) mindestens an ihrer Außenfläche (137), bevorzugt in gleicher Weise auch in ihrer Innenfläche (140), Ringwülste (138, 139; 141, 142) aufweist.

4. Einrichtung nach Anspruch 3, dadurch gekennzeichnet, daß die Wülste (138, 139) der Außenfläche (137) in Längsrichtung gegenüber den Wülsten (141, 142) der Innenfläche (140) versetzt sind.

5. Einrichtung nach Anspruch 3, dadurch gekennzeichnet, daß die Wülste (138, 139) der Außenfläche (137) und die (141, 142) der Innenfläche (140) in Längsrichtung nicht versetzt sind.

## Claims

1. A rapid action coupling device for coupling a first endpiece to a second endpiece, in particular for couping a first endpiece that is fixed to a hose or duct for conveying a cooling liquid of a motor vehicle engine to a second endpiece of a test circuit, of a heater circuit, or of some other component of the vehicle, in which, prior to the engine being filled with said cooling liquid, said first endpiece carries a closure member (130) suitable for being placed in said second endpiece and a perforator (125) suitable for perforating the closure member, which closure member comprises a diaphragm gasket made of elastomer material such as rubber or the like and generally in the form of a cup having a bottom (131) with zones of weakness (150) to enable it to tear after being perforated in its center, said zones being shaped in a star configuration having radiating branches whose ends lie on a circle that cooperates with the periphery to delimit an annular zone, the device being characterized in that the free end of the side wall (132) of the membrane molded onto reinforcement having an L-shaped right cross-section carries at least one sealing lip (201, 202) extending from said end towards the bottom (131), the outside surface of the lip diverging relative to said side wall (132).

2. A device according to claim 1, characterized in that the side wall (132) carries two lips (201, 202) that are advantageously, but not necessarily, disposed symmetrically about the side wall.

3. A device according to claim 1 or claim 2, characterized in that the side wall (132) has annular thickenings (138, 139; 141, 142) on its outside face (137) at least, and preferably on its inside face (140) as well.

4. A device according to claim 3, characterized in that the thickenings (138, 139) on the outside face (137) are longitudinally offset relative to the thickenings (141, 142) on the inside face (140).

5. A device according to claim 3, characterized in that the thickenings (138, 139) of the outside face (137) and the thickenings (141, 142) of the inside face (140) are not offset longitudinally.
